# EUROPÄISCHE PATENTSCHRIFT

(11) **EP 3 202 621 B1**
(45) Veröffentlichungstag und Bekanntmachung des Hinweises auf die Patenterteilung: **20.05.2020**
(21) Anmeldenummer: 17154246.7
(22) Anmeldetag: 01.02.2017
(51) Int. Cl.: B60Q 1/14, B60Q 1/00

(54) **EINSTELLVORRICHTUNG FÜR EINE EINSTELLBARE BELEUCHTUNGSANLAGE EINES KRAFTFAHRZEUGS**
ADJUSTMENT DEVICE FOR AN ADJUSTABLE ILLUMINATING SYSTEM OF A MOTOR VEHICLE
DISPOSITIF DE RÉGLAGE POUR UNE INSTALLATION D'ÉCLAIRAGE RÉGLABLE D'UN VÉHICULE AUTOMOBILE

(30) Priorität: 05.02.2016 DE 102016001420
(43) Veröffentlichungstag der Anmeldung: 09.08.2017
(73) Patentinhaber: Audi AG, 85045 Ingolstadt (DE)
(72) Erfinder: Gut, Carsten, 88662 Überlingen (DE)

(56) Entgegenhaltungen:
- EP-A1- 2 719 580
- DE-A1-102008 029 159
- DE-A1-102013 021 941
- US-A1- 2012 236 581

## Beschreibung

Die Erfindung betrifft eine Einstellvorrichtung für eine einstellbare Beleuchtungsanlage eines Kraftfahrzeugs, wobei die Einstellvorrichtung eine Steuereinheit, die zum Steuern der Beleuchtungsanlage mit der Beleuchtungsanlage koppelbar ist, und eine an die Steuereinheit angeschlossene berührungssensitive Flächeneingabeeinheit zum Erfassen einer manuellen Eingabe eines Nutzers aufweist. Weiterhin betrifft die Erfindung ein Kraftfahrzeug mit einer einstellbaren Beleuchtungsanlage. Schließlich betrifft die Erfindung auch ein Verfahren zum Einstellen einer einstellbaren Beleuchtungsanlage eines Kraftfahrzeugs, wobei die Beleuchtungsanlage mittels einer mit der Beleuchtungsanlage gekoppelten Einstellvorrichtung entsprechend einer von einer berührungssensitiven Flächeneingabeeinheit der Einstellvorrichtung erfassten manuellen Eingabe des Nutzers gesteuert wird.

Aus der DE 10 2008 016 172 A1 ist beispielsweise ein Verfahren zum Betrieb eines Kraftfahrzeuges mit einem Touchscreen bekannt. Dabei wird eine von einem akustischen Befehl abhängige Bedienmaske auf dem Touch-screen dargestellt. Über die Bedienmaske ist es möglich, Fahrzeugfunktionen zu aktivieren beziehungsweise zu deaktivieren. Insbesondere kann eine Fahrzeugbeleuchtung aktiviert beziehungsweise deaktiviert werden. In diesem Sinne offenbart auch die DE 10 2012 214 204 A1 eine Ansteuerung für eine Fahrzeugbeleuchtung.

Im praktischen Betrieb hat sich jedoch gezeigt, dass fahrerindividuelle Einstellungen, insbesondere hinsichtlich der Außenbeleuchtung des Kraftfahrzeugs, wünschenswert sind. Dies ergibt sich dadurch, dass fahrerindividuelle Beleuchtungswünsche unter anderem von einer subjektiv empfundenen Sichtbarkeit abhängig sind. Zwar ist die Fahrzeugaußenbeleuchtung durch gesetzliche Regelungen und Normen teilweise vorgegeben, jedoch besteht innerhalb dieser Grenzen der Wunsch, die Außenbeleuchtung anpassen zu können. Sofern es gesetzlich zulässig ist, kann der Fahrer die Außenbeleuchtung an seine Wünsche anpassen.

Weiterhin offenbart die DE 10 2013 015 718 A1 die Überprüfung eines Leuchtmittels an einem Fahrzeug. Ferner offenbart die EP 2 719 580 A1 einen Suchscheinwerfer für Sonderfahrzeuge. Darüber hinaus offenbart die DE 10 2013 021 941 A1 das Beleuchten einer Fahrzeugumgebung. Ferner offenbart die DE 10 2008 029 159 A1 das Einstellen eines Frontscheinwerferlichtkegels für ein Fahrzeug. Schließlich offenbart die US 2012/0236581 A1 ein Fahrzeugbeleuchtungssystem.

Der Erfindung liegt die Aufgabe zugrunde, eine verbesserte Individualisierung, insbesondere für die Fahrzeugaußenbeleuchtung des Kraftfahrzeugs, bereitzustellen.

Als Lösung wird mit der Erfindung eine Einstellvorrichtung gemäß Anspruch 1, ein Kraftfahrzeug gemäß Anspruch 4 sowie ein Verfahren gemäß dem weiteren Anspruch 6 vorgeschlagen.

Weitere vorteilhafte Ausgestaltungen ergeben sich anhand von Merkmalen der abhängigen Patentansprüche.

Einstellvorrichtungsseitig wird bezüglich einer gattungsgemäßen Einstellvorrichtung insbesondere vorgeschlagen, dass die Steuereinheit ausgebildet ist, eine erfasste manuelle Eingabe des Nutzers einer vorgegebenen Lichtverteilung zuzuordnen und ein der Lichtverteilung entsprechendes Steuersignal für die Beleuchtungsanlage bereitzustellen.

Kraftfahrzeugseitig wird bei einem gattungsgemäßen Kraftfahrzeug insbesondere vorgeschlagen, dass die Beleuchtungsanlage mit einer Einstellvorrichtung gemäß der Erfindung gekoppelt ist.

Verfahrensseitig wird schließlich insbesondere vorgeschlagen, dass bei einem gattungsgemäßen Verfahren die von der Flächeneingabeeinheit erfasste manuelle Eingabe des Nutzers einer einzustellenden Lichtverteilung zugeordnet und ein der Lichtverteilung entsprechendes Steuersignal für die Beleuchtungsanlage bereitgestellt wird.

Mit der Erfindung ist es somit möglich, insbesondere im Bezug auf eine Außenbeleuchtung des Kraftfahrzeugs, eine Einstellmöglichkeit der Beleuchtungsanlage bereitzustellen, die vorzugsweise individuelle Erfordernisse beziehungsweise Wünsche berücksichtigen kann. Die einstellbare Beleuchtungsanlage des Kraftfahrzeugs, die vorzugsweise eine Außenbeleuchtungsanlage des Kraftfahrzeugs ist, kann hinsichtlich ihrer Lichtverteilung eingestellt werden. Die Beleuchtungsanlage weist einen durch Eigenschaften der Beleuchtungsanlage vorgegebenen beleuchtbaren Bereich auf. Der beleuchtbare Bereich ist durch gesetzliche Regelungen und Normen bestimmt. Innerhalb dieses Bereiches kann die Lichtverteilung individuell variiert werden, welches mit der Einstellvorrichtung gemäß der Erfindung erreicht werden kann. Die Lichtverteilung kann beispielsweise während eines Fahrbetriebs des Kraftfahrzeugs durch den Fahrer aktiviert werden. Es kann auch vorgesehen sein, dass die Lichtverteilung bereits mit Betätigen einer Zündung des Kraftfahrzeugs aktiviert wird.

Die Einstellvorrichtung kann beispielsweise eine separate Vorrichtung beispielsweise nach Art eines Touch-Screens oder dergleichen sein, die im Kraftfahrzeug fest installiert ist und mit der einstellbaren Beleuchtungsanlage kommunikationstechnisch gekoppelt ist. Die Einstellvorrichtung kann auch eine separat handhabbare Baugruppe sein. Zu diesem Zweck kann sie beispielsweise tragbar ausgebildet sein. Sie kann aber auch in das Kraftfahrzeug und hier insbesondere in eine Bedienkonsole des Kraftfahrzeugs integriert angeordnet sein. Die Einstellvorrichtung umfasst somit eine Nutzerschnittstelle. Die kommunikationstechnische Kopplung kann beispielsweise drahtlos aber auch drahtgebunden sein. Die Einstellvorrichtung kann aber auch eine separat handhabbare Vorrichtung sein, beispielsweise ein tragbares mobiles Kommunikationsendgerät, vorzugsweise ein Smartphone, ein Blackberry, ein Tablet-PC, ein LAPTOP oder dergleichen, insbesondere mit einem geeigneten Rechnerprogramm, APP und/oder dergleichen. Die Einstellvorrichtung weist eine Steuereinheit auf, die beispielsweise durch eine Hardwareschaltung, eine Rechnereinheit, Kombinationen hiervon oder dergleichen gebildet sein kann. Die Steuereinheit/ kann lösbar mit der Beleuchtungsanlage koppelbar sein. Es kann aber auch vorgesehen sein, dass die Kopplung durch eine drahtlose Kommunikationsverbindung bereitgestellt ist, die beispielsweise lediglich dann aktiv ist, wenn eine Einstellung der Beleuchtungsanlage vorzunehmen ist. Bei drahtgebundenen Kommunikationsverbindungen kann ein Anschließen über eine Steckverbindung oder dergleichen vorgesehen sein.

Die berührungssensitive Flächeneingabeeinheit ist vorzugsweise durch ein Touch-Pad oder dergleichen gebildet. Die berührungssensitive Flächeneingabeeinheit ermöglicht es, dass der Nutzer eine zweidimensionale Nutzereingabe vornehmen kann. Diese kann durch die berührungssensitive Flächeneingabeeinheit erfasst werden, die ein entsprechendes Eingabesignal erzeugt. Dadurch können nicht nur punktuelle Eingaben sondern auch zweidimensionale Eingaben, insbesondere Bewegungsabläufe oder dergleichen, erfasst werden. Die Flächeneingabeeinheit ist an die Steuereinheit angeschlossen, sodass eine kommunikationstechnische Verbindung besteht und die Steuereinheit von der Flächeneingabeeinheit Eingabesignale bezüglich erfasster Nutzereingaben erhält.

Die einstellbare Beleuchtungsanlage weist vorzugsweise wenigstens einen einstellbaren Scheinwerfer auf, der insbesondere für die Außenbeleuchtung des Kraftfahrzeugs vorgesehen ist. Vorzugsweise ist der Scheinwerfer hinsichtlich seines beleuchtbaren Bereichs einstellbar ausgebildet. Zu diesem Zweck kann er eine Scheinwerfersteuereinheit aufweisen. Der Scheinwerfer kann beispielsweise ein Frontscheinwerfer, ein Rückscheinwerfer oder dergleichen sein. Die Beleuchtungsanlage kann natürlich auch mehr als einen Scheinwerfer aufweisen, beispielsweise zwei Frontscheinwerfer, zwei Rückscheinwerfer und/oder dergleichen. Die Einstellbarkeit der Beleuchtungsanlage kann dadurch erreicht werden, dass der beziehungsweise die Scheinwerfer hinsichtlich der optischen Eigenschaften, seiner Orientierung und/oder dergleichen eingestellt werden kann, sodass eine Ausleuchtung innerhalb des beleuchtbaren Bereiches gemäß der einzustellenden Lichtverteilung verändert werden kann. Zu diesem Zweck kann vorgesehen sein, dass die Beleuchtungsanlage geeignete Einstelleinheiten umfasst, die in vorgebbarer Weise von der Scheinwerfersteuereinheit mittels entsprechender Scheinwerfersteuersignale gesteuert werden. Das Einstellen der Lichtvereilung bezieht sich vorzugsweise nicht auf das Einschalten beziehungsweise das Ausschalten der Beleuchtungsanlage. Es bezieht sich darauf, innerhalb des beleuchtbaren Bereiches eine Beleuchtungskulisse bereitzustellen, die vorzugsweise fahrerindividuell eingestellt werden kann, wobei die Grenzen durch gesetzliche Vorschriften und Normen aber auch durch konstruktive Aspekte gegeben sind.

Erfindungsgemäß ist die Steuereinheit ausgebildet, eine erfasste manuelle Eingabe des Nutzers einer vorgegebenen Lichtverteilung zuzuordnen. Zu diesem Zweck kann vorgesehen sein, dass wenigstens eine Lichtverteilung vorgegeben ist, die der erfassten manuellen Eingabe des Nutzers zugeordnet ist. Natürlich kann vorgesehen sein, dass die Lichtverteilung oder eine Mehrzahl von unterschiedlichen Lichtverteilungen in einer Speichereinheit der Einstellvorrichtung abrufbar gespeichert ist und jede der Lichtverteilungen einer spezifischen Nutzereingabe individuell zugeordnet ist. Dadurch ist es möglich, durch eine spezifische Nutzereingabe eine zugehörige Lichtverteilung auszuwählen und zu aktivieren. Die Nutzereingabe wird erfasst, insbesondere wird eine Art der Nutzereingabe erfasst, woraufhin die berührungssensitive Flächeneingabeeinheit ein entsprechend zugeordnetes Eingabesignal erzeugt und an die Steuereinheit übermittelt, sodass durch die Steuereinheit eine Zuordnung zu einer jeweiligen Lichtverteilung ermöglicht werden kann. Durch die Steuereinheit kann sodann nach der Zuordnung ein entsprechendes Steuersignal für die Beleuchtungsanlage bereitgestellt werden, beispielsweise indem es an die Scheinwerfersteuereinheit übermittelt wird. Die Beleuchtungsanlage kann dann aufgrund des bereitgestellten Steuersignals die Einstellung der vorgegebenen Lichtverteilung vornehmen. Dadurch kann eine Flexibilisierung hinsichtlich der Beleuchtung, insbesondere der Außenbeleuchtung erreicht werden.

Die vorgegebene Lichtverteilung kann werksseitig für das Kraftfahrzeug und/oder die Beleuchtungsanlage vorgegeben sein. Sie kann auch individuell zuvor erstellt worden sein. Die Lichtverteilung ist durch einen Datensatz repräsentiert, der durch die Steuereinheit und/oder gegebenenfalls auch durch die Scheinwerfersteuereinheit zur Einstellung der Beleuchtungsanlage ausgewertet werden kann.

Die Steuereinheit ist ausgebildet, im Rahmen des Einstellens die Lichtverteilung, im Bezug auf einen Lichtschwerpunkt, einen Öffnungswinkel, ein Abdunkeln oder ein Erhellen, zu verändern und/oder zu aktivieren oder zu deaktivieren. Dadurch kann eine beispielsweise werksseitig vorgegebene Beleuchtungssituation auf einfache Weise individuell angepasst werden. Das Abdunkeln oder Erhellen kann auch lediglich für einen Ausschnitt der Lichtverteilung vorgesehen sein. Der Fahrer hat dadurch die Möglichkeit, die Lichtverteilung nach seinen Bedürfnissen entsprechend zu verändern. Wenn er beispielsweise im rechten Frontbereich des Kraftfahrzeugs weniger Licht haben möchte als im linken Frontbereich, kann er entsprechende Anpassungen vornehmen. Der Fahrer hat die Möglichkeit, Lichtfunktionen durch Einstellen einer gewünschten Lichtverteilung individuell an seine Bedürfnisse anpassen zu können. So kann beispielsweise vorgesehen sein, dass ein Lichtschwerpunkt der Beleuchtungsanlage in einen gewünschten Bereich gesetzt werden kann. Dadurch kann ein für den Fahrer wichtiger Bereich besser ausgeleuchtet sein. Es kann aber auch vorgesehen sein, dass ein Öffnungswinkel der Beleuchtung verändert wird, um beispielsweise einen seitlichen Bereich besser ausleuchten zu können. Vorteilhaft erweist sich diese Ausgestaltung, wenn das Kraftfahrzeug rangiert werden muss, beispielsweise in einem Parkbereich oder dergleichen. Darüber hinaus besteht natürlich die Möglichkeit, durch das Abdunkeln oder Erhellen die Beleuchtung des Kraftfahrzeugs an umgebende Lichtverhältnisse besser anzupassen, sodass eine Sichtbarkeit eines Bereichs, in dem das Kraftfahrzeug von dem Fahrer geführt wird, verbessert ist.

Die berührungssensitive Flächeneingabeeinheit umfasst eine grafische Ausgabeeinheit und die Steuereinheit ist ausgebildet, ein der vorgegebenen Lichtverteilung zugeordnetes Symbol, das einen Lichtverteilungsabschnitt innerhalb der Lichtverteilung oder ein Auswahlfeld repräsentiert, auf der grafischen Ausgabeeinheit durch den Nutzer auswählbar darzustellen. Vorzugsweise ist die berührungssensitive Flächeneingabeeinheit einstückig mit der grafischen Ausgabeeinheit ausgebildet, beispielsweise als berührungsempfindlicher Bildschirm, Touchscreen oder dergleichen. Die grafische Ausgabeeinheit kann aber auch separat als Bildschirm, LED-Display, LCD-Display oder dergleichen ausgebildet sein. Vorzugsweise ist jedoch eine einstückige Konstruktion vorgesehen. Das Symbol kann beispielsweise durch einen Lichtbalken, einen Lichtpunkt, ein Logo in der Lichtverteilung und/oder dergleichen gebildet sein. Darüber hinaus kann das Symbol auch durch ein Auswahlfeld gebildet sein, das durch den Nutzer durch Berührung an der Stelle des Symbols auswählbar ist. Dadurch kann eine sehr einfache und intuitive Bedienung sowie Anpassung der Lichtverteilung erreicht werden. Beispielsweise kann auf diese Weise ein Baustellenlicht bereitgestellt werden, welches Breitenabmessungen des eigenen Kraftfahrzeugs auf der Fahrbahn visualisiert. Dadurch kann eine Fahrzeugführung, beispielsweise in beengten Baustellenbereichen, verbessert werden. Diese Funktion ist jedoch nicht auf Baustellen beschränkt zu sehen, sondern kann auch bei anderen Situationen zum Einsatz kommen, beispielsweise beim Rangieren, insbesondere in einem Parkplatzbereich und/oder dergleichen. Wird beispielsweise ein Logo mittels der Lichtverteilung dargestellt, kann vorgesehen sein, dass mittels geeigneter Auswahlfelder eine Auswahl ermöglicht wird, aus welcher Perspektive das Logo möglichst unverzerrt sichtbar ist, beispielsweise aus der Sicht des Fahrers des Kraftfahrzeugs, aus Sicht eines Passanten und/oder dergleichen. Diese Ausgestaltung erlaubt es, intuitiv darzustellen, was eine Lichtfunktion beziehungsweise Lichtverteilung tatsächlich macht. Es können dem Fahrer auch einige bereits vorgegebene Standardfunktionen bezüglich der Lichtverteilung mittels Symbolen dargestellt werden, die er direkt durch antippen auswählen und aktivieren kann. Die Einstellvorrichtung veranlasst dann eine entsprechende Einstellung der Lichtverteilung der Beleuchtungsanlage. Besonders vorteilhaft erweist es sich, wenn das Symbol und/oder das Auswahlfeld bereits intuitiv die durch sie bewirkte Funktion darstellen.

Die Steuereinheit ist ausgebildet, die vorgegebene Lichtverteilung durch Verschieben des Symbols zu verändern. Dies erlaubt es, zum Beispiel einen Lichtbalken, wie er beispielsweise für ein Baustellenlicht oder dergleichen genutzt werden kann, in eine bereits vorhandene ausgewählte Lichtverteilung hineinzuziehen und die Lichtverteilung diesbezüglich zu ergänzen. Darüber hinaus kann ein solcher Lichtbalken auch innerhalb der Lichtverteilung verschoben werden, um die Lichtverteilung entsprechend anpassen zu können. Durch entsprechende Betätigung kann auch vorgesehen sein, dass Abmessungen des Lichtbalkens oder vergleichbarer Symbole verändert werden können, um dadurch ebenfalls Einfluss auf die Lichtverteilung nehmen zu können. Insbesondere kann hierdurch nicht nur eine bestehende Lichtverteilung geändert sondern auch eine neue erstellt werden. Darüber hinaus kann eine Positionierungshilfe vorgesehen sein, die es dem Nutzer erleichtert, das Symbol an eine zulässige Position zu verschieben. Die Positionierungshilfe kann beispielsweise durch einen gestrichelten Kasten oder dergleichen dargestellt sein.

Vorliegend weist die Beleuchtungsanlage wenigstens einen Pixelscheinwerfer auf. Ein Pixelscheinwerfer kann beispielsweise ein Scheinwerfer basierend auf einem LED-Array, einem LCD-Scheinwerfer, einem DMD-Scheinwerfer oder einem Laserscanner basieren. Vorzugsweise eignet sich der Laserscanner, weil bei diesem die Möglichkeit besonders hervortritt, eine Lichtstärkepeak des Scheinwerfers auch tatsächlich zu "verschieben". Der Pixelscheinwerfer kann von der Einstellvorrichtung individuell angesteuert werden. Es kann aber auch vorgesehen sein, dass, wenn mehrere Pixelscheinwerfer beziehungsweise Scheinwerfer vorgesehen sind, diese gemeinsam von der Einstellvorrichtung angesteuert werden. Vorzugsweise ist für jeden Scheinwerfer der Beleuchtungsanlage jeweils ein eigenes Steuersignal von der Einstellvorrichtung vorgesehen. Dadurch kann eine besonders flexible Einstellmöglichkeit hinsichtlich der Lichtverteilung erreicht werden.

Weiterhin wird vorgeschlagen, dass die Steuereinheit ausgebildet ist, bei Aktivierung mehrerer Lichtverteilungen durch Überlagerung eine Überlagerungslichtverteilung zu ermitteln und das Steuersignal für die Beleuchtungsanlage entsprechend bereitzustellen. Dadurch ist es auf einfache Weise möglich, durch Kombination bereits vorhandener Lichtverteilungen eine neue Lichtverteilung zu erzeugen. Die neu erzeugte Lichtverteilung kann darüber hinaus gespeichert werden, sodass sie zukünftig auf einfache Weise wieder aufrufbar ist. Das Überlagern kann durch pixelweises Addieren von Lichtstärkewerten aber auch durch pixelweises Auswählen des jeweils größten Lichtstärkewertes der zu überlagernden Lichtverteilungen erfolgen oder dergleichen. Darüber hinaus bestehen natürlich auch weitere Möglichkeiten, das Überlagern auszuführen, beispielsweise pixelweises Multiplizieren von Lichtstärkewerten, weitere Verknüpfungen, insbesondere unter Berücksichtigung von benachbarten Lichtstärkewerten und/oder dergleichen.

Bezüglich des Kraftfahrzeugs wird ferner vorgeschlagen, dass die Beleuchtungsanlage ausgebildet ist, aufgrund eines Steuersignals der Einstellvorrichtung das Einstellen der Beleuchtungsanlage unabhängig von einem eingeschalteten Zustand der Beleuchtungsanlage zu ermöglichen. Dadurch kann mittels der Einstellvorrichtung die Lichtverteilung auch dann eingestellt werden, wenn die Beleuchtungsanlage selbst aktuell nicht aktiv ist, das heißt, dass beispielsweise Leuchtmittel oder dergleichen deaktiviert sind. Sobald die Beleuchtungsanlage aktiviert wird, beziehungsweise eines oder mehrere der Leuchtmittel der Beleuchtungsanlage beziehungsweise Scheinwerfer der Beleuchtungsanlage aktiviert werden, kann dann automatisch die vorgegebene Lichtverteilung eingestellt werden. Dadurch ist es möglich, eine gewünschte Lichtverteilung bereits vor deren gewünschter Aktivierung vorzunehmen. Der Fahrer des Kraftfahrzeugs braucht also nicht während der Fahrt in die Lichtverteilung einzugreifen, sondern er kann dies bereits vor Fahrtantritt tun.

Weitere Vorteile und Merkmale sind der folgenden Beschreibung von Ausführungsbeispielen anhand der folgenden Figuren zu entnehmen. In den Figuren bezeichnen gleiche Bezugszeichen gleiche Merkmale und Funktionen.

Es zeigen:
- Fig. 1: in schematischer Frontansicht einen Ausschnitt einer Einstellvorrichtung gemäß der Erfindung bezüglich des Verschiebens eines Lichtschwerpunktes zur Bereitstellung einer Lichtverteilung;
- Fig. 2: in schematischer Frontansicht einen Ausschnitt einer Einstellvorrichtung gemäß der Erfindung bezüglich der Änderung eines Öffnungswinkels zur Bereitstellung einer Lichtverteilung;
- Fig. 3: in schematischer Frontansicht eine Einstellvorrichtung gemäß der Erfindung mit Auswahlfeldern zum Auswählen einer Lichtverteilung;
- Fig. 4A-4D: in schematischer Frontansicht eine Einstellvorrichtung gemäß der Erfindung mit unterschiedlichen Kombinationen von Lichtverteilungen, die überlagert werden können;
- Fig. 5: in schematischer Frontansicht eine Einstellvorrichtung gemäß der Erfindung zum Bereitstellen von Baustellenlicht und
- Fig. 6: in schematischer Frontansicht eine Einstellvorrichtung gemäß der Erfindung mit einem Hineinziehen eines Logos in die Lichtverteilung.

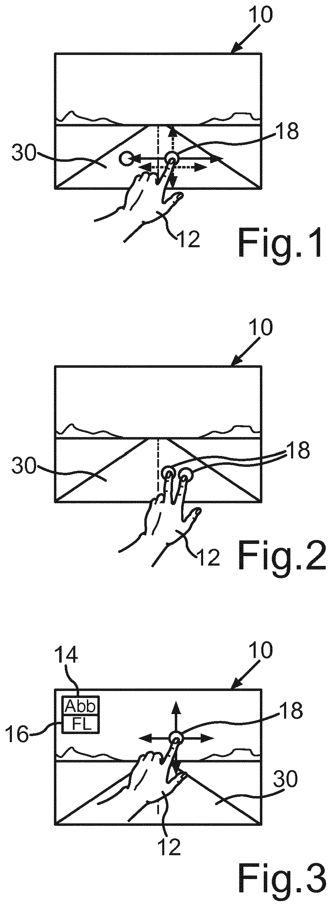

Fig. 1 zeigt in einer schematischen Darstellung einen Ausschnitt einer Einstellvorrichtung 10 gemäß der Erfindung, die vorliegend eine berührungssensitive Flächeneingabeeinheit in Verbindung mit einer grafischen Ausgabeeinheit umfasst. Vorliegend ist die Einstellvorrichtung 10 als Touch-Screen ausgebildet. Die Einstellvorrichtung 10 umfasst eine nicht weiter dargestellte Steuereinheit, die zum Steuern einer ebenfalls nicht weiter dargestellten einstellbaren Beleuchtungsanlage eines Kraftfahrzeuges dient und zu diesem Zweck an diese angeschlossen ist. Vorliegend ist die Einstellvorrichtung 10 stationär im Kraftfahrzeug eingebaut und kann von einem Fahrer des Kraftfahrzeugs bedient werden. Alternativ kann auch vorgesehen sein, dass die Einstellvorrichtung 10 durch ein Smartphone oder ein vergleichbares mobiles Endgerät gebildet ist, welches beispielsweise über Nahfunk mit der Beleuchtungsanlage in Kommunikationsverbindung steht. In diesem Fall kann die Einstellvorrichtung eine geeignete APP umfassen, um die erforderliche Funktionalität bei dem mobilen Endgerät bereitstellen zu können.

An die Steuereinheit ist der Touch-Screen angeschlossen, der unter anderem dem Erfassen einer manuellen Eingabe eines Nutzers 12 dient. In Fig. 1 ist die Hand des Nutzers 12 dargestellt. Die grafische Ausgabeeinheit ist hier ebenfalls durch den Touch-Screen gebildet, sodass eine Ausgabe der Steuereinheit an den Nutzer visualisiert werden kann. Vorliegend stellt die in Fig. 1 dargestellte Ausgabe einen Verlauf einer Straße dar, auf der das Kraftfahrzeug geführt wird. Mit 18 ist ein Lichtschwerpunkt einer aktuellen Lichtverteilung dargestellt, die von der Beleuchtungsanlage des Kraftfahrzeugs aufgrund eines Steuersignals der Steuereinheit gestellt ist.

Mit 30 ist eine auf der grafischen Ausgabeeinheit der Einstellvorrichtung 10 beziehungsweise des Touch-Screens dargestellte Straße dargestellt, auf der das Kraftfahrzeug vom Fahrer geführt wird.

Der Nutzer kann durch Berühren des Lichtschwerpunktes 18 auf der grafischen Ausgabeeinheit und durch dessen Verschieben den tatsächlichen Lichtschwerpunkt der Beleuchtungsanlage verschieben. Die Steuereinheit erfasst die manuelle Eingabe des Nutzers 12 und ordnet ihr eine einzustellende Lichtverteilung zu. Vorliegend ergibt sich die einzustellende Lichtverteilung aus einer aktuellen Lichtverteilung unter Berücksichtigung der Verschiebung des Lichtschwerpunktes gemäß der Nutzereingabe. Die Steuereinheit erzeugt sodann ein entsprechendes Steuersignal, welches der Beleuchtungsanlage bereitgestellt wird. Die Beleuchtungsanlage empfängt das Steuersignal und stellt ihre Beleuchtungsmittel, vorliegend ein linker und ein rechter vorderer Pixelscheinwerfer, entsprechend ein.

Gemäß der vorliegenden Ausgestaltung kann durch eine Linksbewegung beziehungsweise eine Rechtsbewegung eine Verschiebung des Lichtschwerpunktes 18 entsprechend entweder nach links oder nach rechts durchgeführt werden. Ein Verschieben des Lichtschwerpunktes 18 auf der Einstellvorrichtung 10 nach oben verlegt den Lichtschwerpunkt im Bezug auf das Kraftfahrzeug nach vorne, wohingegen ein Verschieben des Lichtschwerpunktes 18 auf der Einstellvorrichtung 10 nach unten ein Verschieben des Lichtschwerpunktes 18 der Beleuchtungsanlage zum Fahrzeug hin bewirkt.

Fig. 2 zeigt eine Ausgestaltung wie Fig. 1, wobei jedoch hier durch eine Öffnungsbewegung von zwei Fingern des Nutzers 12 ein Öffnungswinkel der durch die Beleuchtungsanlage bereitgestellten Lichtverteilung verändert wird. Ausgehend von einem Lichtschwerpunkt 18 wie in Fig. 1 dargestellt, kann durch eine mit den Fingern ausgeführte Spreizbewegung der Lichtschwerpunkt 18 auf der grafischen Ausgabeeinheit in zwei Lichtschwerpunkte geteilt werden, die mittels der Finger der Hand des Nutzers 12 in einen gewünschten Abstand zueinander gebracht werden können. Die Steuereinheit ordnet dies der Veränderung des Öffnungswinkels zu und ermittelt eine entsprechende Veränderung des Öffnungswinkels. Sie erzeugt sodann ein entsprechendes Steuersignal, welches an die Beleuchtungsanlage übermittelt wird, woraufhin die Beleuchtungsanlage eine entsprechende Einstellung der Lichtverteilung vornimmt.

Fig. 3 stellt eine weitere Ausgestaltung einer Einstellvorrichtung 10 gemäß der Erfindung dar. Die Ausgestaltung gemäß Fig. 3 basiert auf der Ausgestaltung gemäß Fig. 1, wobei ergänzend zu der Ausgestaltung gemäß Fig. 1 im linken oberen Bereich zwei Auswahlfelder 14 und 16 angezeigt sind. Das Auswahlfeld 14 ist dem Abblendlicht zugeordnet, wohingegen das Auswahlfeld 16 dem Fernlicht zugeordnet ist. Durch Antippen kann der Nutzer 12 eine entsprechende Einstellung der Lichtverteilung aktivieren oder - durch erneutes Antippen - wieder deaktivieren. Durch Antippen des Auswahlfeldes 14 wird auf der grafischen Ausgabeeinheit der Einstellvorrichtung 10 die aktuelle Lichtverteilung für das Abblendlicht dargestellt. Betätigt der Nutzer 12 das Auswahlfeld 16, so wird auf die aktuelle Lichtverteilung bezüglich des Fernlichts umgeschaltet und diese dargestellt. Die Veränderung der Lichtschwerpunktes 18 erfolgt wieder wie bereits zur Fig. 1 erläutert.

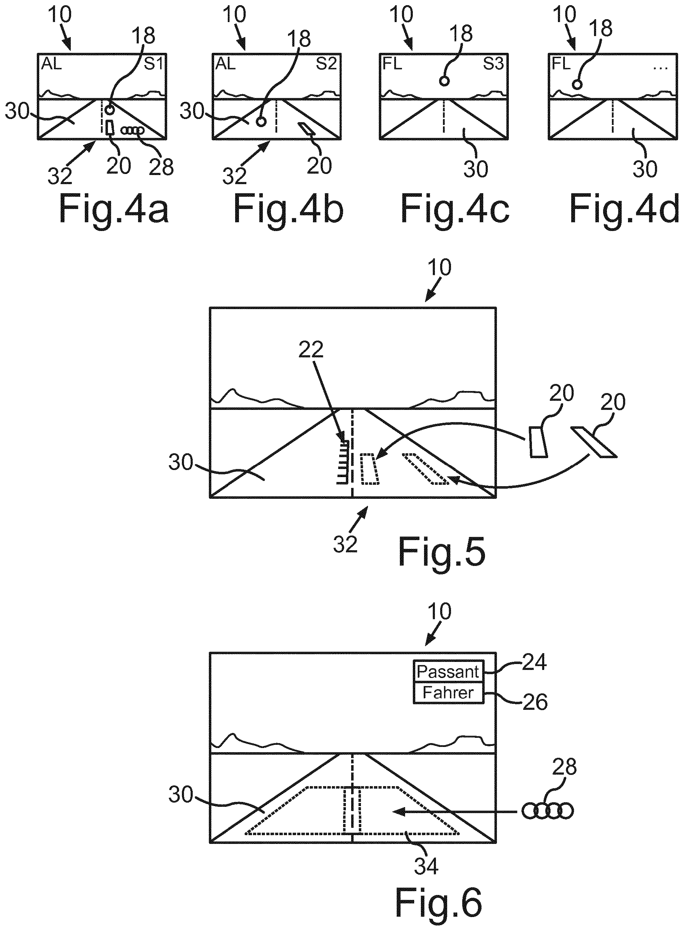

Die Fig. 4A-4D zeigen unterschiedliche Überlagerungen von Lichtverteilungen. In Fig. 4A ist eine Überlagerung einer Lichtverteilung wie in Fig. 1 mit ergänzend einem Lichtbalken 20 sowie einem Logo 28 dargestellt, die in einer Überlagerungslichtverteilung 32 dargestellt sind. Fig. 4B zeigt eine weitere Ausgestaltung einer Überlagerungslichtverteilung 32, bei der der Lichtschwerpunkt auf eine Gegenfahrbahn der Straße 30 und ein Lichtbalken 20 am rechten Rand einer selbst genutzten Fahrbahn durch das Kraftfahrzeug angeordnet sind. In Fig. 4C ist eine Lichtverteilung für Fernlicht kombiniert mit einer Lichtverteilung für einen rechten Randbereich der selbst genutzten Fahrbahn dargestellt. In Fig. 4D ist eine Fernlichtverteilung aktiviert, bei der ein Lichtschwerpunkt 18 in einem linken Bereich jenseits der Straße 30 gerichtet ist.

Fig. 5 zeigt eine weitere Ausgestaltung für eine Einstellvorrichtung 10 gemäß der Erfindung, bei der eine Anwendung in einem Baustellenbereich dargestellt ist. Mit 22 ist eine mittlere Fahrbahnabgrenzung bezeichnet, wie sie üblicherweise im Bereich von Baustellen zur Fahrbahntrennung eingesetzt ist. Aus Fig. 5 ist ersichtlich, dass Lichtbalken 20 positioniert werden können, sodass auf der Straße 30 entsprechende Lichtverteilungen dargestellt sind. Dadurch wird wiederum eine Überlagerungslichtverteilung 32 dargestellt. Vorliegend ist vorgesehen, dass durch die Balken 20 Abmessungen des Fahrzeugs auf die Fahrbahn der Straße 30 projiziert sind, sodass die Führung des Kraftfahrzeugs im Bereich der Baustelle erleichtert ist. Vorliegend sind zwei Lichtbalken vorgesehen. Es kann aber auch vorgesehen sein, dass lediglich einer der Lichtbalken der Lichtverteilung hinzugefügt wird.

Fig. 6 zeigt eine weitere Ausgestaltung für eine Einstellvorrichtung 10 gemäß der Erfindung, wobei im rechten oberen Bereich zwei Auswahlfelder 24, 26 dargestellt sind. Das Auswahlfeld 24 ist mit "Passant" bezeichnet, wohingegen das Auswahlfeld 26 mit "Fahrer" bezeichnet ist. Vorliegend ist vorgesehen, dass ein mit 28 bezeichnetes Logo vom Fahrer in einen Bereich 34 verschoben wird, sodass das Logo 28 auf der Straße 30 im vorgesehenen Bereich im Rahmen der Lichtverteilung dargestellt wird. Durch Auswahl eines der beiden Auswahlfelder kann der Fahrer auswählen, ob das Logo 28 für den Fahrer oder für einen Passanten möglichst unverzerrt dargestellt wird.

In den Fig. 5 und 6 ist vorgesehen, dass Symbole, die einen Lichtverteilungsabschnitt darstellen, hier Lichtbalken 20, innerhalb einer Lichtverteilung mittels Drag-and-drop in die gewünschte Position verschoben werden. Zu diesem Zweck werden die entsprechenden Symbole am Rande der grafischen Ausgabeeinheit beziehungsweise des Touch-Screens für den Nutzer auswählbar dargestellt. Durch Antippen und anschließendes Verschieben des Symbols kann der Nutzer somit die Lichtverteilung in gewünschter Weise einstellen.

Die Ausführungsbeispiele dienen lediglich der Erläuterung der Erfindung und sind für diese nicht beschränkend. Die für die erfindungsgemäße Vorrichtung beschriebenen Vorteile und Merkmale sowie Ausführungsformen gelten gleichermaßen für ein Kraftfahrzeug mit der erfindungsgemäßen Vorrichtung sowie ein entsprechendes Verfahren und umgekehrt. Insbesondere können für Vorrichtungsmerkmale entsprechende Verfahrensmerkmale und umgekehrt vorgesehen sein.

## Patentansprüche

1. Einstellvorrichtung (10) für eine einstellbare, wenigstens einen Pixelscheinwerfer aufweisende Beleuchtungsanlage eines Kraftfahrzeugs, wobei die Beleuchtungsanlage einen durch Eigenschaften der Beleuchtungsanlage vorgegebenen beleuchtbaren Bereich aufweist, der durch gesetzliche Regelungen und Normen bestimmt ist, wobei die Einstellvorrichtung (10) eine Steuereinheit, die zum Steuern der Beleuchtungsanlage mit der Beleuchtungsanlage koppelbar ist, und eine an die Steuereinheit angeschlossene berührungssensitive Flächeneingabeeinheit zum Erfassen einer manuellen Eingabe eines Nutzers (12) aufweist, wobei die Steuereinheit ausgebildet ist, die Lichtverteilung innerhalb des vorgegebenen beleuchtbaren Bereiches individuell zu variieren, eine erfasste manuelle Eingabe des Nutzers (12) einer durch einen zur Einstellung der Beleuchtungsanlage dienenden Datensatz repräsentierten vorgegebenen Lichtverteilung zuzuordnen und ein der Lichtverteilung entsprechendes Steuersignal für die Beleuchtungsanlage bereitzustellen, wobei die berührungssensitive Flächeneingabeeinheit eine graphische Ausgabeeinheit umfasst und die Steuereinheit ausgebildet ist, ein der vorgegebenen Lichtverteilung zugeordnetes Symbol (14, 16, 20, 24, 26, 28), das einen Lichtverteilungsabschnitt (20, 28) innerhalb der Lichtverteilung oder ein Auswahlfeld (14, 16, 24, 26) repräsentiert, auf der graphischen Ausgabeeinheit durch den Nutzer auswählbar darzustellen, wobei die Steuereinheit ausgebildet ist, die vorgegebene Lichtverteilung durch Verschieben des Symbols (20, 28) zu verändern, um die Lichtverteilung (20, 28), in Bezug auf einen Lichtschwerpunkt (18), einen Öffnungswinkel, ein Abdunkeln oder ein Erhellen, zu verändern und/oder zu aktivieren oder zu deaktivieren.

2. Einstellvorrichtung nach Anspruch 1, **dadurch gekennzeichnet, dass** die Steuereinheit ausgebildet ist, einen kraftfahrzeugbezogenen Parameter zu erfassen und eine diesem Parameter zugeordnete Lichtverteilung automatisch zu aktivieren oder zu deaktivieren.

3. Einstellvorrichtung nach einem der Ansprüche 1 oder 2, **dadurch gekennzeichnet, dass** die Steuereinheit ausgebildet ist, bei Aktivierung mehrerer Lichtverteilungen durch Überlagerung eine Überlagerungslichtverteilung (32) zu ermitteln und das Steuersignal für die Beleuchtungsanlage entsprechend bereitzustellen.

4. Kraftfahrzeug mit einer einstellbaren Beleuchtungsanlage, die wenigstens einen Pixelscheinwerfer und einen durch gesetzliche Regelungen und Normen bestimmten beleuchtbaren Bereich aufweist und die mit einer Einstellvorrichtung (10) nach einem der vorhergehenden Ansprüche gekoppelt ist.

5. Kraftfahrzeug nach Anspruch 4, **dadurch gekennzeichnet, dass** die Beleuchtungsanlage ausgebildet ist, aufgrund eines Steuersignals der Einstellvorrichtung (10) das Einstellen der Beleuchtungsanlage unabhängig von einem eingeschalteten Zustand der Beleuchtungsanlage zu ermöglichen.

6. Verfahren zum Einstellen einer einstellbaren, wenigstens einen Pixelscheinwerfer aufweisenden Beleuchtungsanlage eines Kraftfahrzeugs, wobei die Beleuchtungsanlage einen durch Eigenschaften der Beleuchtungsanlage vorgegebenen beleuchtbaren Bereich aufweist, der durch gesetzliche Regelungen und Normen bestimmt ist, und mittels einer mit der Beleuchtungsanlage gekoppelten Einstellvorrichtung (10) entsprechend einer von einer berührungssensitiven Flächeneingabeeinheit der Einstellvorrichtung erfassten manuellen Eingabe eines Nutzers (12) gesteuert wird, wobei die Lichtverteilung innerhalb des vorgegebenen beleuchtbaren Bereiches individuell variiert wird, zu welchem Zweck die von der Flächeneingabeeinheit erfasste manuelle Eingabe des Nutzers (12) einer durch einen Datensatz repräsentierten vorgegebenen Lichtverteilung zugeordnet und ein der Lichtverteilung entsprechendes Steuersignal für die Beleuchtungsanlage bereitgestellt wird, wobei die berührungssensitive Flächeneingabeeinheit eine graphische Ausgabeeinheit umfasst und mittels der Steuereinheit ein der vorgegebenen Lichtverteilung zugeordnetes Symbol (14, 16, 20, 24, 26, 28), das einen Lichtverteilungsabschnitt (20, 28) innerhalb der Lichtverteilung oder ein Auswahlfeld (14, 16, 24, 26) repräsentiert, auf der graphischen Ausgabeeinheit durch den Nutzer auswählbar dargestellt wird, wobei die vorgegebene Lichtverteilung durch Verschieben des Symbols (20, 28) verändert wird, um die Lichtverteilung (20, 28), in Bezug auf einen Lichtschwerpunkt (18), einen Öffnungswinkel, ein Abdunkeln oder ein Erhellen, zu verändern und/oder zu aktivieren oder zu deaktivieren.

## Claims

1. Adjustment device (10) for an adjustable illuminating system, having at least one pixel headlamp, of a motor vehicle, wherein the illuminating system has an illuminable region which is predetermined by characteristics of the illuminating system, which region is specified by legal regulations and standards, wherein the adjustment device (10) has a control unit which can be coupled with the illuminating system for controlling the illuminating system and a touch sensitive area input unit attached to the control unit for capturing a manual input of a user (12), wherein the control unit is designed to vary individually the light distribution within the determined illuminable region, to assign a captured manual input of the user (12) to a predetermined light distribution represented by a dataset serving to adjust the illuminating system, and to provide a control signal, corresponding to the light distribution, for the illuminating system, wherein the touch sensitive area input unit includes a graphical output unit and the control unit is designed to display on the graphical output unit in a manner able to be selected by the user a symbol (14, 16, 20, 24, 26, 28) assigned to the predetermined light distribution which represents a light distribution portion (20, 28) within the light distribution or a selection field (14, 16, 24, 26), wherein the control unit is designed to alter the predetermined light distribution by displacing the symbol (20, 28) in order to alter and/or to activate or to deactivate the light distribution (20, 28) with regard to a light focus (18), an aperture angle, a darkening or a brightening.

2. Adjustment device according to claim 1, **characterised in that** the control unit is configured to capture a motor vehicle-related parameter and automatically to activate or to deactivate a light distribution assigned to this parameter.

3. Adjustment device according to any of claims 1 or 2, **characterised in that** the control unit is configured to detect a superimposed light distribution (32) at the activation of several light distributions by superimposition, and to provide the control signal for the illumination system accordingly.

4. Motor vehicle with an adjustable illumination system which has at least one pixel headlamp and an illuminable region specified by legal regulations and standards, and which is coupled with an adjustment device (10) according to any of the preceding claims.

5. Motor vehicle according to claim 4, **characterised in that** the illumination system is configured on the basis of a control signal of the adjustment device (10) to facilitate the adjusting of the illumination system independently of a switched-on state of the illumination system.

6. Method for adjusting an adjustable illumination system of a motor vehicle, which illumination system has at least one pixel headlamp, wherein the illumination system has an illuminable region, predetermined by characteristics of the illumination system, which is specified by legal requirements and standards, and is controlled by means of an adjustment device (10) coupled with the illumination system corresponding to a manual input, captured by a touch sensitive area input unit of the adjusting device, of a user (12), wherein the light distribution is individually varied within the predetermined illuminable region, for which purpose the manual input, captured by the area input unit, of the user (12) is assigned to a predetermined light distribution represented by a dataset, and a control signal, corresponding to the light distribution, for the illumination system is provided, wherein the touch sensitive area input unit includes a graphical output unit and by means of the control unit a symbol (14, 16, 20, 24, 26, 28) assigned to the predetermined light distribution, which represents a light distribution portion (20, 28) within the light distribution or a selection field (14, 16, 24, 26) is represented on the graphical output unit so as to be able to be selected by the user, wherein the predetermined light distribution is altered by displacing the symbol (20, 28), in order to alter and/or to activate or deactivate the light distribution (20, 28) with regard to a light focus (18), an aperture angle, a darkening or a brightening.

## Revendications

1. Dispositif de réglage (10) pour un système d'éclairage réglable présentant au moins un phare à pixels d'un véhicule à moteur, dans lequel le système d'éclairage présente une zone pouvant être éclairée prédéfinie par des propriétés du système d'éclairage, qui est déterminée par des réglementations et des normes légales, dans lequel le dispositif de réglage (10) présente une unité de commande, qui peut être couplée au système d'éclairage pour commander le système d'éclairage, et une unité d'entrée à surface tactile connectée à l'unité de commande pour détecter une entrée manuelle par un utilisateur (12), dans lequel l'unité de commande est conçue pour faire varier individuellement la distribution de lumière dans la zone pouvant être éclairée prédéfinie, pour associer une entrée manuelle détectée de l'utilisateur (12) à une distribution de lumière prédéfinie représentée par un ensemble de données utilisé pour régler le système d'éclairage, et pour fournir un signal de commande au système d'éclairage correspondant à la distribution de lumière, dans lequel l'unité d'entrée à surface tactile comprend une unité de sortie graphique, et l'unité de commande est conçue pour montrer d'une manière pouvant être choisie par l'utilisateur un symbole associé à la distribution de lumière prédéfinie (14, 16, 20, 24, 26, 28), qui représente une section de distribution de lumière (20, 28) à l'intérieur de la distribution de lumière ou un champ de sélection (14, 16, 24, 26), sur l'unité de sortie graphique, dans lequel l'unité de commande est conçue pour changer la distribution de lumière prédéfinie en déplaçant le symbole (20, 28), afin de changer et/ou d'activer ou de désactiver la distribution de lumière (20, 28), par rapport à un centre de gravité lumineux (18), un angle d'ouverture, un assombrissement ou un éclaircissement.

2. Dispositif de réglage selon la revendication 1, **caractérisé en ce que** l'unité de commande est conçue pour détecter un paramètre lié au véhicule automobile et pour activer ou désactiver automatiquement une distribution de lumière associée à ce paramètre.

3. Dispositif de réglage selon l'une quelconque des revendications 1 ou 2, **caractérisé en ce que** l'unité de commande est conçue pour déterminer une distribution de lumière superposée (32) en activant une pluralité de distributions de lumière par superposition et pour fournir le signal de commande pour le système d'éclairage en conséquence.

4. Véhicule automobile avec un système d'éclairage réglable qui a au moins un phare à pixels et une zone pouvant être éclairée déterminée par des réglementations et des normes légales et qui est couplé à un dispositif de réglage (10) selon l'une quelconque des revendications précédentes.

5. Véhicule automobile selon la revendication 4, **caractérisé en ce que** le système d'éclairage est conçu pour permettre le réglage du système d'éclairage indépendamment d'un état activé du système d'éclairage sur la base d'un signal de commande provenant du dispositif de réglage (10).

6. Procédé pour régler un système d'éclairage réglable présentant au moins un phare à pixels d'un véhicule à moteur, dans lequel le système d'éclairage présente une zone pouvant être éclairée prédéfinie par des propriétés du système d'éclairage, qui est déterminée par des réglementations et des normes légales, et est commandée au moyen d'un dispositif de réglage (10) couplé au système d'éclairage conformément à une entrée manuelle d'un utilisateur (12) détectée par une unité d'entrée à surface tactile du dispositif de réglage, dans lequel la distribution de lumière dans la zone pouvant être éclairée prédéfinie est modifiée individuellement, pour associer l'entrée manuelle de l'utilisateur (12) détectée depuis l'unité d'entrée à surface tactile à une distribution de lumière prédéfinie représentée par un ensemble de données, et pour fournir au système d'éclairage un signal de commande correspondant à la distribution de lumière, dans lequel l'unité d'entrée à surface tactile comprend une unité de sortie graphique, et montre au moyen de l'unité de commande, d'une manière pouvant être choisie par l'utilisateur, un symbole associé à la distribution de lumière prédéfinie (14, 16, 20, 24, 26, 28), qui représente une section de distribution de lumière (20, 28) à l'intérieur de la distribution de lumière ou un champ de sélection (14, 16, 24, 26), sur l'unité de sortie graphique, dans lequel la distribution de lumière prédéfinie est changée en déplaçant le symbole (20, 28), afin de changer et/ou d'activer ou de désactiver la distribution de lumière (20, 28), par rapport à un centre de gravité lumineux (18), un angle d'ouverture, un assombrissement ou un éclaircissement.
